# EUROPÄISCHE PATENTSCHRIFT

(11) **EP 1 165 188 B1**
(45) Veröffentlichungstag und Bekanntmachung des Hinweises auf die Patenterteilung: **28.01.2004**
(21) Anmeldenummer: 00912316.7
(22) Anmeldetag: 30.03.2000
(51) Int. Cl.: A63B 21/005

(54) **MIT MUSKELKRAFT BETREIBBARES ELEKTRISCHES ANTRIEBSSYSTEM**
DRIVE SYSTEM OPERATED BY MUSCLE-POWER
SYSTEME DE COMMANDE ACTIONNE PAR LA FORCE MUSCULAIRE

(30) Priorität: 03.04.1999 CH 63999
(43) Veröffentlichungstag der Anmeldung: 02.01.2002
(73) Patentinhaber: Swissmove AG, 8002 Zürich (CH)
(72) Erfinder: FUCHS, Andreas, CH-3011 Bern (CH); BLATTER, Jürg, CH-3600 Thun (CH)
(86) Internationale Anmeldenummer: PCT/CH2000/000189
(87) Internationale Veröffentlichungsnummer: WO 2000/059773

(56) Entgegenhaltungen:
- EP-A- 0 784 008
- DE-A- 19 732 430
- US-A- 5 256 115

## Beschreibung

Die vorliegende Erfindung betrifft ein mit Muskelkraft betreibbares elektrisches Antriebssystem für ein Fahrzeug gemäss Oberbegriff von Patentanspruch 1.

Aus der EP 0784008 ist beispielsweise ein derartiges Antriebssystem bekannt in einem Fahrrad mit einem Tretpedal und einem mechanisch mit dem Tretpedal verbundenen Generator sowie mit einer elektrischen Transmission zu einem steuerbaren Fahrmotor als elektrischem Verbraucher. Diese bekannten Antriebssysteme mit elektrischer Transmission weisen jedoch noch entscheidende Nachteile auf. So ist insbesondere auch das Anfahren bzw. das Antreten des Pedals aus dem Stillstand nicht gelöst, indem der Fahrer zuerst praktisch ins Leere tritt, d.h. das Tretpedal bietet beim Antreten zuerst praktisch keinen Widerstand, bis der Generator auf genügend hohe Tourenzahlen beschleunigt ist. Dieses absolut ungewohnte Fehlen eines Pedalwiderstandes beim Antreten bildet ein grosses Risiko. Es kann dazu führen, dass der Fahrer das Gleichgewicht verliert und mit seinem Fahrrad stürzt, überdies kann damit auch die sofort beim Anfahren benötigte hinreichende Anfahrleistung mit dem Generator nicht erzeugt werden und schliesslich widerspricht diese bisherige, normale Generatorcharakteristik auch jedem gewohnten Fahrgefühl, das ein Fahrer ganz selbstverständlich von einem mechanischen Pedalantrieb erwartet. D.h. das Anfahrverhalten dieser bisher bekannten elektrischen Antriebe entspricht in keiner Weise einer ergonomisch erforderlichen Charakteristik und es steht auch in krassem Gegensatz zum gewohnten Anfahrverhalten bei mechanischen Pedalantrieben.

Die bekannten elektrischen Antriebssysteme sind andererseits aber auch nicht geeignet zur Anwendung in Trainingsgeräten, indem für den Generator gegenüber rein mechanisch betriebenen Trainingsgeräten ein zusätzlicher Aufwand erforderlich ist, ohne dass damit schon wesentliche Verbesserungen des Nutzens bzw. eine wesentliche Erweiterung der Anwendungen erreicht würden. Ein sehr grosser Nachteil bisheriger Trainingsgeräte besteht vor allem darin, dass damit nur eine sehr beschränkte einseitige Betätigung möglich ist, so dass das stationäre Training rasch langweilig wird und solche Trainingsgeräte deshalb nach anfänglicher Benützung nur noch selten oder gar nicht mehr eingesetzt werden. Es wäre daher eine sehr wichtig Aufgabe, Trainingsgeräte attraktiver, vielseitig verwendbar und unterhaltsamer auszubilden, so dass sie mehr und regelmässig benützt würden und dass damit auch ein universellerer Einsatz möglich wäre.

Es ist deshalb Aufgabe der vorliegenden Erfindung, ein elektrisches Antriebssystem für Fahrzeuge zu schaffen, welches ein günstiges ergonomisches, der bisherigen Erfahrung und Gewöhnung entsprechendes Anfahrverhalten aufweist.

Diese Aufgabe wird gelöst durch ein erfindungsgemässes Antriebssystem gemäss Patentanspruch 1.

Gemäss abhängigem Patentanspruch 2 wird ein Anstriebssystem geschaffen, welches auch in stationären Trainingsgeräten einsetzbar ist und das beim Einsatz in Trainings- und Therapiegeräten verschiedene, universellere Betriebsarten ermöglicht, wobei insbesondere auch exzentrisches Training und reine Bewegungstherapie möglich sind.

Die abhängigen Ansprüche betreffen vorteilhafte Weiterbildungen der Erfindung mit besonders günstigem und ergonomischem Anfahrverhalten und mit universeller Einsetzbarkeit für beliebige Trainingsarten sowie Ausführungsvarianten, welche besondere Vorteile bezüglich einfacher Herstellbarkeit sowie weiterer Anwendungen und Therapiearten aufweisen.

Im folgenden wird die Erfindung anhand von Beispielen im Zusammenhang mit den Figuren weiter erläutert. Dabei zeigt
- Fig. 1: ein Schema eines erfindungsgemässen Antriebssystems für Fahrzeuge,
- Fig. 2: das Generatormoment in Funktion des Pedal-Drehwinkels beim Anfahren,
- Fig. 3: das Generatormoment in Funktion der Tretfrequenz,
- Fig. 4: einen zeitlichen Verlauf der Tretfrequenz beim Anfahren,
- Fig. 5: das Generatormoment in Funktion der Geschwindigkeit,
- Fig. 6: das Generatormoment in Funktion der Tretfrequenz im Motorbetriebsmodus für exzentrisches Training,
- Fig. 7: ein Fahrrad mit Antriebs-Modulen,
- Fig. 8: ein Mehrspurfahrzeug mit Antriebsschwinge,
- Fig. 9: schematisch ein Antriebssystem mit Modulen,
- Fig. 10: einen Generator mit Kurzschluss-Anfahrschaltung,
- Fig. 11: ein flaches Pedal-Generator-Modul.

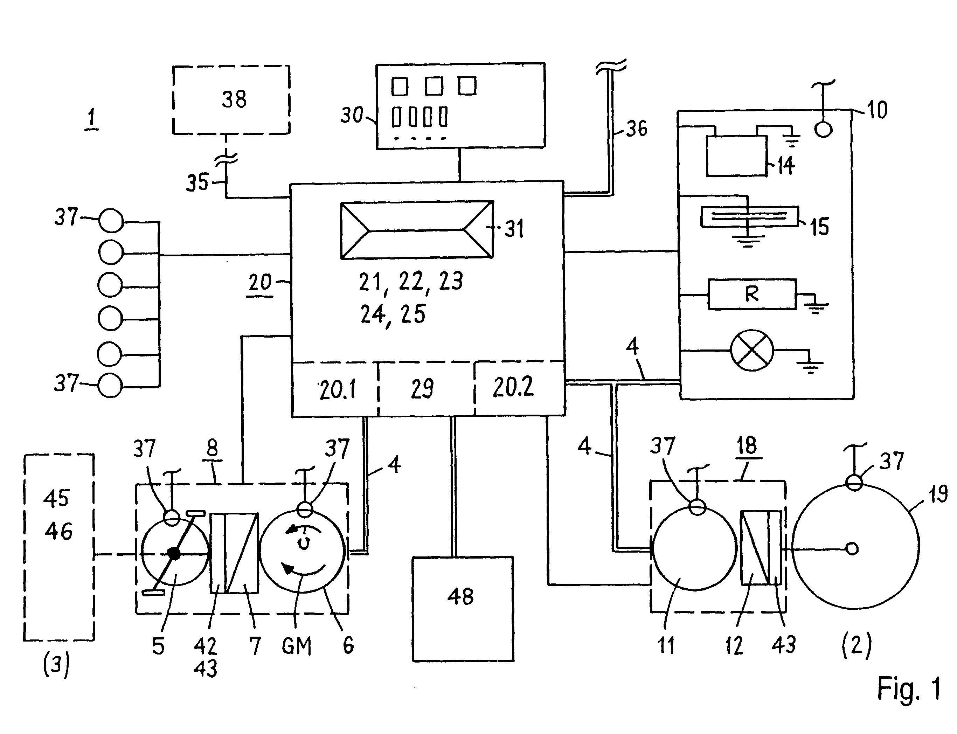

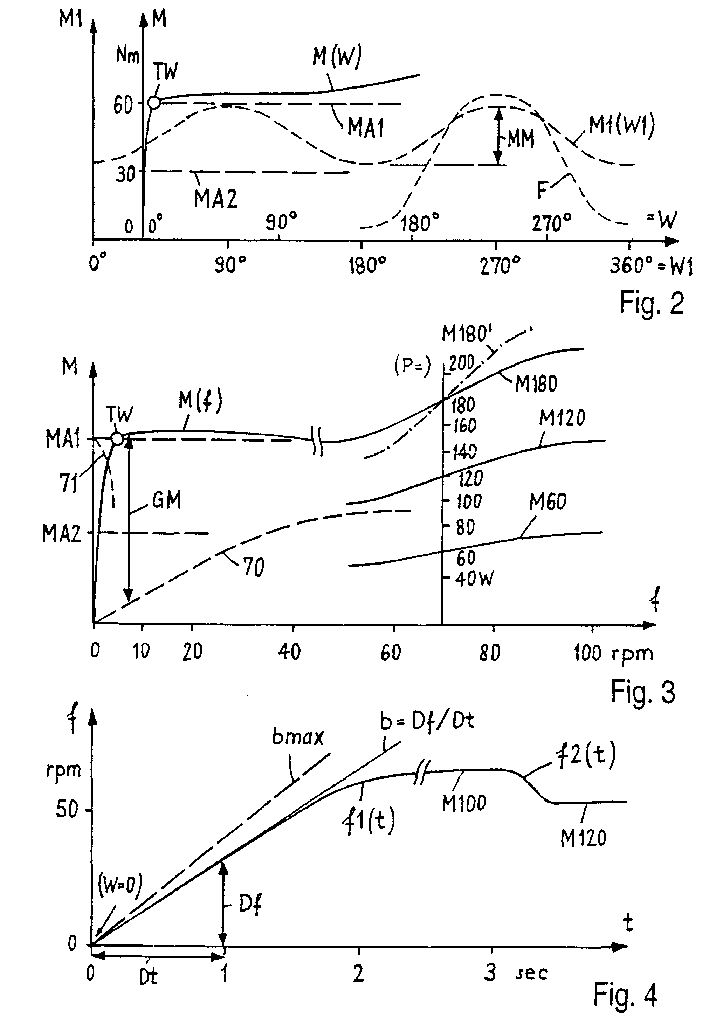

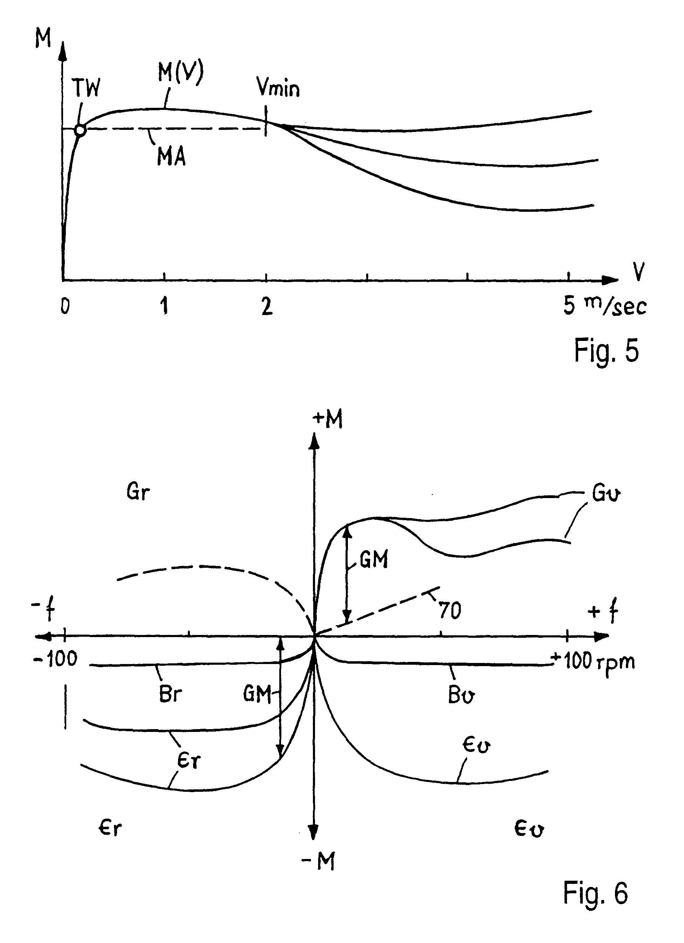

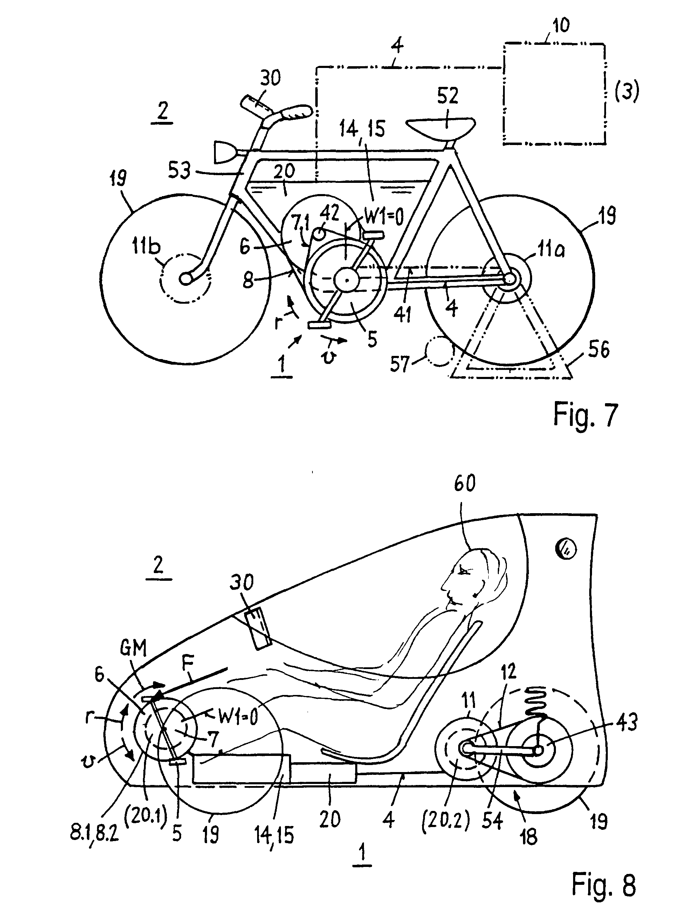

Fig. 1 zeigt ein erfindungsgemässes elektrisches Antriebssystem 1 für Fahrzeuge mit einem Tretpedal 5 als muskelkraftbetriebene Antriebsvorrichtung und einem mechanisch mit dem Tretpedal verbundenen Generator 6 sowie mit einer elektrischen Transmission 4 vom Generator 6 zu einem elektrischen Verbraucher 10 und/oder zu einem Antriebsmotor 11 sowie mit einer elektrischen Steuerung 20. Die elektrische Steuerung 20 weist ein Steuerprogramm 21 des Generators 6 auf, mit dem ein Gegenmoment GM am Generator, bezogen auf die Vorwärts-Tretrichtung v, erzeugt werden kann. Wobei das Antriebssystem, eingesetzt in einem Fahrzeug 2 (z.B. Fig. 7 und 8), eine Anfahrsteuerung 22 des Generators 6 aufweist, mit welcher ein bei Betätigung des Tretpedals 5 aus dem Stillstand heraus unmittelbar auftretender Tretwiderstand TW erzeugt wird und womit ein hohes Anfahrwiderstandsmoment MA am Tretpedal erzeugt wird beim Anfahren aus dem Stillstand, bis eine minimale Fahrgeschwindigkeit Vmin bzw. eine normale Tretfrequenz f erreicht wird, wie mit den Fig. 2 bis 5 weiter dargestellt wird. Für den Einsatz in einem stationären Trainingsgerät 3 weist das Antriebssystem 1 als Gegenmoment GM eine Motorbetriebssteuerung 23 mit einem bidirektionalen Wandler 31 auf, mit welchen der Generator 6 auch als Motor betreibbar ist, mit steuerbarer Ein- und Auskuppelung von elektrischer Leistung, insbesondere auch für exzentrisches Training. Dies wird anhand von Fig. 6 im folgenden weiter erläutert. Fig. 1 zeigt weiter ein Übersetzungsgetriebe 7 zwischen Tretpedal 5 und Generator 6 und einen durch ein Programm der Steuerung 20 sperrbaren Freilauf 42 oder eine schaltbare Kupplung 43. Tretpedal und Generator können als separate Baueinheit ein Pedal-Generator-Modul 8 bilden. Zur Anwendung in Fahrzeugen 2 kann der Motor 11 ein Untersetzungsgetriebe 12 zu einem Antriebsrad 19 aufweisen, welche ebenfalls als separate Baueinheit, d.h. als Motor-Modul 18, ausgebildet sein können. Als elektrische Verbraucher 10 weist ein Fahrzeug auch einen Akku als Speicher 14 und/oder einen Super-Cap (super capacitor) 15 auf für besonders rasche Entladungsvorgänge bei hohem Motorleistungsbedarf und für rasches Aufladen bei elektrischem Rekuperations-Bremsen. Bei der Anwendung in stationären Trainingsgeräten können weitere elektrische Verbraucher, z.B. elektrische Bremsen, aber auch mechanische Bremsen 45 und mechanische Speicher 46 im konzentrischen Trainingsbetrieb zur Abführung der am Tretpedal erzeugten Energie dienen. Sensoren und Messwertgeber 37, z.B. am Tretpedal 5, am Generator 6, am Motor 11 und am Antriebsrad 19 sowie an weiteren Komponenten des Antriebssystems sind mit der Steuerung 20 verbunden und dienen zur Überwachung und Steuerung des Betriebs. Dazu sind Betriebsprogramme 24 für Trainingsgeräte sowie Fahrprogramme 25 zur Anwendung in Fahrzeugen in der Steuerung 20 enthalten. Ein Eingabe- und Anzeigegerät 30 dient zum Wählen von Fahr- und Betriebsprogrammen sowie zum Anzeigen von Fahr- und Betriebsdaten, welche in einem internen Datenspeicher 29 gespeichert sein können. Ein Interface 35 zum Anschluss an externe Geräte 38, z.B. an einen PC, dient der weiteren Steuerung, Programmierung und Auswertung. Ein Netzanschluss 36 kann zum Laden von elektrischen Speichern 14, 15 wie auch, beim exzentrischen Training, zum Antrieb des Generators 6 als Motor eingesetzt werden.

Je nach Anwendung können auch zusätzliche Energiequellen 48 angeschlossen werden, z.B. eine leichte Benzinmotor-Generator-Einheit als "range extender" oder zusammenlegbare Solarzellen.

Bei bisherigen Pedal-Generatorantrieben mit elektrischer Transmission ist im Stillstand praktisch kein Tretwiderstand spürbar und das Widerstandsmoment des Generators beim Antreten ist sehr klein bis eine genügende Tretfrequenz erreicht ist, d.h. der Fahrer tritt beim Anfahren zuerst einmal ins Leere (Kurve 70, Fig. 3). Demgegenüber erwartet ein Benutzer bei jedem mit Muskelkraft betriebenen mechanischen Pedalantrieb und im speziellen bei einem Fahrrad (mit oder ohne elektrischer Übertragung) jedoch einen Stillstands-Tretwiderstand und ein hohes Anfahrmoment aus dem Stillstand heraus, so dass schon die erste halbe Umdrehung, d.h. von einer oberen in eine untere Pedalstellung, ein hohes Widerstandsmoment aufweist. Dies ist doppelt notwendig für Normalfahrräder mit aufrechter Sitzposition, damit sich ein Benutzer beim Anfahren auf das Pedal abstützen kann und das Antreten aus dem Stillstand des Fahrrads bis zu einer minimalen stabilen Fahrgeschwindigkeit Vmin von z.B. 2 m/sec mit relativ grossem Anfahrwiderstand rasch und mit spürbarer Beschleunigung durch das Treten erfolgen kann. Sonst besteht die Gefahr, dass der Fahrer vom Pedal abrutscht bzw. stürzt. Ein spürbarer, hinreichend grosser Anfahrwiderstand wird jedoch nicht nur für Normalfahrräder (nach Fig. 7) erwartet und gefordert. Auch für Liegefahrrad-Positionen bzw. Mehrspurfahrzeuge (Fig. 8), bei denen keine Kippgefahr besteht, wird beim Anfahren aus dem Stillstand mit mechanischen Muskelkraftantrieben im Prinzip die gleiche Charakteristik erwartet, d.h. ein genügend hohes Widerstandsmoment MA muss spürbar sein. Im Prinzip muss damit auch die fehlende direkte Kopplung des Pedals 5 mit dem Antriebsrad 19 (da die Fahrradkette ja durch die elektrische Transmission 4 ersetzt wurde) erfindungsgemäss durch einen angemessenen Tretwiderstand TW und ein hohes Anfahrmoment MA substituiert werden. Damit kann auch das gewohnte und erwartete ergonomische Fahrradgefühl erzeugt werden. Dies wird anhand der Fig. 2 - 5 weiter ausgeführt.

Fig. 2 zeigt den Verlauf des durch den Generator 6 am Tretpedal erzeugten Widerstandsmoments M in Funktion des Drehwinkels am Pedal. Mit W1 wird der Pedalwinkel bezogen auf den oberen Totpunkt des Muskelkraftantriebs als fester Nullpunkt (W1 = 0°) bezeichnet (vergleiche Fig. 7 und 8). Der Tretwinkel W bezieht sich dagegen auf das Antreten bzw. Anfahren mit W = 0. Vorausgesetzt wird, dass mit genügend Kraft bzw. Moment und Winkelbeschleunigung angefahren wird. Gemäss Kurve M(W) ist der Generator so ausgelegt und gesteuert, dass sehr rasch ein relativ hoher Tretwiderstand TW und anschliessend ein hohes Widerstandsmoment MA erreicht wird, d.h. z.B. innerhalb von 0.1 rad bzw. von wenigen Grad,z.B. 5° - 8°, und dass dieser Sollwert des Anfahrmoments MA auch im weiteren Verlauf des Anfahrens nicht unterschritten, sondern zunehmend übertroffen wird. In der Fig. 2 ist als Beispiel ein hoher Soll-Wert MA1 von z.B. 60 Nm für den Betrieb in Normalfahrrädern (nach Fig. 7) und ein tieferer Wert MA2 von z.B. 30 Nm für Drei- oder Vierradfahrzeuge gemäss Fig. 8 angegeben, vorzugsweise beträgt das Anfahrmoment MA am Pedal mindestens 20 - 40 Nm für Mehrspurfahrzeuge und z.B. mindestens 40 - 60 Nm für Normalfahrräder. Entsprechend kann auch der Tretwiderstand TW z.B. auf mindestens 150 - 300 N bzw. 300 - 400 N eingestellt sein.

Dies ergibt nach Fig. 3 einen Momentenverlauf M(f) (inklusive Gegenmoment GM) am Tretpedal 5, welcher beim Antreten aus dem Stillstand sehr rasch, z.B. schon bei einer Tourenzahl von 10 U/min (rpm) mindestens auf den eingestellten Sollwert des Anfahrmoments MA1 bzw. MA2 ansteigt und womit auch der gewünschte Tretwiderstand TW auftritt. Nach dem Anfahren bei Normalfahrt wird meist mit wesentlich tieferem mittlerem Tretmoment M gefahren, z.B. mit 10 - 20 Nm bei 60 rpm. Im Bereich der normalen Tretfrequenz von z.B. 50 - 100 rpm steigt dann das Generatormoment M in Funktion der Tretfrequenz f vorzugsweise deutlich an, so dass mit steigender Tretfrequenz am Generator eine überproportionale Leistungserhöhung resultiert. Das Steuerprogramm 21 des Generators bzw. die Fahrprogramme 25 können mit Vorteil eine Stufenumschaltung aufweisen, welche im Prinzip einer vielstufigen mechanischen Gangschaltung ähnlich ist. Dabei können beispielsweise verschiedene enggestufte Leistungsstufen von 40, 60, 80, 100, 120, 140, 160, 180, 200 W (Muskelkraftleistung) usw. einstellbar sein, bezogen auf eine bestimmte Normaltourenzahl von z.B. 70 rpm, entsprechend den Kurvencharakteristiken M60 ... M120 ... M180 für Normalfahrt. Im Gegensatz zu einem mechanischen Gangwechsel können diese elektrischen Stufen gleichmässig optimal abgestuft werden und das elektrische Umschalten zwischen den Stufen erfolgt unterbrechungsfrei und ausgeglichen. Diese Momentencharakteristik M(f) kann je nach Art und vorgesehenem Einsatz des Fahrzeugs, wie auch der Benützer-Präferenz entsprechend, in weiten Bereichen eingestellt bzw. programmiert werden. So können u.a. der Normaltretbereich, der Anstieg des Moments im Tretbereich, d.h. die Charakteristik, und die Anzahl und Höhe der verschiedenen Leistungsstufen gewählt bzw. eingestellt werden. Beispielsweise kann ein flacherer Anstieg, im Normalfall ein mittlerer Anstieg etwa gemäss Kurve M180 oder auch ein relativ steiler Anstieg gemäss Kurve M180' gewählt werden. Überdies wird die Generatorsteuerung so ausgelegt, dass der Bereich des maximalen Wirkungsgrads des Generators dem gewählten Normalbereich der Tretfrequenz entspricht, um damit beim Fahren praktisch immer die bestmögliche Leistungsausbeute zu erreichen. Der Normal-Tretbereich liegt wie erwähnt ca. zwischen 50 - 100 rpm, für sehr sportliche Fahrer eher höher, z.B. zwischen 70 und 100 rpm, und für Normalfahrer eher tiefer, z.B. zwischen 50 und 80 rpm.

Die Kurven 70 zeigen demgegenüber einen Momentenverlauf M eines bisherigen Generator-Antriebs in Fig. 3 und 6, in Abhängigkeit von Winkel W bzw. Tretfrequenz f, wie dies z.B. aus der EP 0784008 bekannt ist. Die Differenz zwischen den beiden Momentenkurven entspricht dem Gegenmoment GM. Bei diesen bisherigen Antrieben ist (ohne Gegenmoment) gemäss Kurve 70 das Widerstandsmoment des Generators anfangs beim Anfahren aus dem Stillstand sehr klein und erreicht erst spät, d.h. nach dem Anfahren, genügend hohe Werte. Ergonomisches und sicheres Anfahren ist hier nicht möglich. Denn das Pedal fällt anfangs mindestens beim ersten Niedertreten eines Pedals praktisch ohne spürbaren Widerstand durch, z.B. über einen Winkel W von 1 bis 2 rad (60° bis 120°), was einen Velofahrer das Gleichgewicht verlieren lässt, so dass er stürzen kann.

Fig. 2 zeigt als Weiterbildung der Erfindung auch einen Momentenverlauf M1(W1), wobei das Widerstandsmoment M1 in Phase mit dem Pedalwinkel W1 moduliert ist. Dabei ist das Widerstandsmoment M1 z.B. in den oberen und unteren Pedaltotpunkten mit W1 = 0° und 180° minimal und dazwischen bei W1 = 90° und 270° wird das Maximum erreicht, d.h. da wo auch die ebenfalls eingezeichneten tangentialen Pedalkräfte F minimal bzw. maximal sind. M1 kann auch phasenverschoben moduliert sein, z.B. mit einem Minimum bei W1 = 5° und 185° Dieser Modulationsanteil MM kann ebenfalls gewählt bzw. eingestellt werden und z.B. kann MM = 30 - 60% des Maximalwerts von M1 betragen. Auch mit dieser Modulation von M1 kann das gewohnte Fahr- und Tretgefühl erzeugt werden. Der gewohnte gleichmässige Rundlauf wie bei einem rein mechanischen Tretantrieb wird einerseits durch die Massenträgheit des Pedal-Generator-Moduls 8 und anderseits durch diese mögliche zusätzliche Modulation M1(W1) erreicht.

Fig. 4 illustriert das erfindungsgemässe ergonomische und sichere Anfahrverhalten mittels einer Darstellung des zeitlichen Verlaufs der Tretfrequenz f(t). Beim Antreten aus dem Stillstand (bei W = 0, f = 0) mit einer hinreichend grossen Betätigungskraft F bzw. Anfahrmoment M am Pedal 5 steigt die Frequenz f gemäss Kurve f1(t) gleichmässig an bis die normale Tretfrequenz nach z.B. 1 - 3 sec erreicht ist. Wesentlich ist, dass dabei die Anfahrwinkelbeschleunigung b = Df/Dt begrenzt ist. Durch die Generatorsteuerung (20.1, 21) wird eine maximale Beschleunigung bmax von beispielsweise 3 - 5 rad/sec² vorgegeben oder eingestellt (für ein Betätigungsmoment M von z.B. 50 Nm). Vorzugsweise beträgt diese maximale Beschleunigung bmax z.B. 4 rad/sec² (im Mittel z.B. über eine 90°-Drehung des Pedals). Entsprechend der gewünschten Anwendung kann z.B. ein hohes Anfahrwiderstandsmoment MA1 (siehe Fig. 2 und 3) mit einer sehr geringen maximalen Beschleunigung von bmax = 3 rad/sec² oder ein tieferes Anfahrmoment MA2 entsprechend z.B. einer bmax von 5 rad/sec² eingestellt werden. Eine normale Tretfrequenz von z.B. 60 rpm (entsprechend ca. 6 rad/sec) würde damit erst nach ca. 1.2 - 2 sec erreicht. Nach dem Anfahren, im normalen Fahrzustand, kann, wie zu Fig. 3 erläutert, vorzugsweise zwischen verschiedenen Fahrstufen umgeschaltet werden, was beispielsweise in der Funktion f2(t) dargestellt ist, mit einem Umschalten von der Charakteristik M120 auf die Charakteristik M100, was einem Herunterschalten entspricht. Dieses elektrische Umschalten erfolgt beim Weitertreten mit konstanter Kraft und ohne Unterbrechung oder Schaltpausen.

Eine weitere Darstellung des Anfahrens, vor allem für Normalfahrräder, illustriert Fig. 5, wo der Momentenverlauf M(V) in Funktion der Geschwindigkeit V gezeigt wird. Daraus ist auch ersichtlich, dass ab Geschwindigkeit 0 beim Start sofort ein genügend hohes Anfahrwiderstandsmoment MA erreicht werden muss. Dies nicht nur aus Stabilitäts- und Ergonomie-Gründen, sondern auch, um mit dem Generator sofort eine dem hohen Moment M entsprechende hohe Anfahrleistung zur raschen Beschleunigung des Fahrzeugs auf eine minimale stabile Fahrgeschwindigkeit Vmin zu liefern. Dazu kann unterstützend auch Batteriestrom eingesetzt werden. Diese beträgt bei einem Fahrrad z.B. 2 - 3 m/sec. Nach dem Anfahren, d.h. im normalen Fahrbetrieb, wird meist mit wesentlich tieferem Pedalmoment M gefahren, z.B. mit 15 Nm entsprechend einer Tretleistung von ca. 100 W bei 60 rpm. Ohne diese erfindungsgemässe Generatorsteuerung müsste ein Fahrrad zuerst im wesentlichen nur mit Energie aus einer Batterie auf die Minimalgeschwindigkeit Vmin beschleunigt werden, während der Fahrer zuerst ins Leere pedalen würde, wie Kurve 70 in Fig. 2 darstellt. Dies wäre ergonomisch und energetisch widernatürlich und absolut unsinnig. Es würde auch ein so schlechtes und unsicheres Fahrgefühl ergeben, dass dafür wohl kaum Anwender und Käufer gefunden werden könnten.

Das zu den Fig. 2 - 5 beschriebene erfindungsgemässe ergonomische Anfahrverhalten ist natürlich in erster Linie zur Anwendung des Antriebssystems in Fahrzeugen erforderlich. Bei stationären Trainings- und Rehabilitationsgeräten, wo keine Kippgefahr für den Fahrer besteht und keine hinreichende Anfahrbeschleunigung erreicht werden muss, ist diese gewohnte ergonomische Anfahrcharakteristik eines Muskelkraftantriebs wohl erwünscht, jedoch nicht unbedingtes Erfordernis. Damit ein elektrischer Generator-Antrieb hier Sinn macht, müssen dessen Anwendungsbereiche im Vergleich zu bekannten einfacheren, rein mechanischen Geräten wesentlich weiter und attraktiver sein. Dies wird anhand von Fig. 6 erläutert, welche verschiedene mögliche Betriebsarten des Generatorantriebs zeigt. Hier ist der Momentenverlauf M(f) in Funktion der Tretfrequenz f in beiden Richtungen dargestellt (v = Vorwärts-Tretrichtung mit Frequenz +f und r = Rückwärts-Tretrichtung mit Frequenz -f). Dabei ist der Generator im Generatorbetrieb, d.h. mit Widerstandsmoment +M (für konzentrisches Training gemäss Kurven Gv, Gr) wie auch als Motor mit Moment -M (für exzentrisches Training gemäss Kurven Ev, Er).

Die Kurve Gv entspricht dem normalen Generatorantrieb in Fahrzeugen, der jedoch natürlich auch auf einem stationären Trainingsgerät, z.B. mit wählbaren Fahrprogrammen 25, ausgeführt werden kann. D.h. ein Fahrzeug, z.B. ein Fahrrad, aber auch ein leichtes Dreirad kann sowohl als Fahrzeug eingesetzt werden wie auch als stationäres Trainingsgerät. Ein Fahrrad kann so bei schlechtem Wetter z.B. im Hause aufgebockt werden und damit können dann beliebige Fahrprogramme gefahren werden (Fig.7). Der Generator kann im Prinzip auch rückwärts betrieben werden gemäss Kurve Gr (konzentrisches Training mit Rückwärtstreten).

Nach Fig. 6 wird der Generatorantrieb im Prinzip für 4-Quadrantenbetrieb ausgelegt (Gv, Gr, Ev, Er), wobei das Gegenmoment GM in den Quadranten Gv und Er erzeugt wird. Im einfachsten Fall wird der Generator, als Motor betrieben, zur Bewegungstherapie gemäss den Kurven Br, Bv in beiden Richtungen r und v eingesetzt. Dies dient nur zum Bewegen von Gliedern (Beine, Arme oder Rumpf) im wesentlichen ohne Einsatz von Muskelkraft, z.B. zur Rehabilitation der Bewegungsfähigkeit. Der Betrieb des Generators 6 erfolgt durch den bidirektionalen Wandler 31 bzw. die Generatorsteuerung 20.1 und das Generatorsteuerprogramm 21. Ausgehend von der reinen Bewegungstherapie gemäss Kurven Br, Bv kann die eingesetzte bremsende Muskelkraft beliebig gesteigert werden durch einstellbaren und auch programmierbaren Momentenverlauf -M gemäss den Kurven Er und Ev. Es können somit beliebig wählbare und steuerbare Exzentrikprogramme gefahren werden.

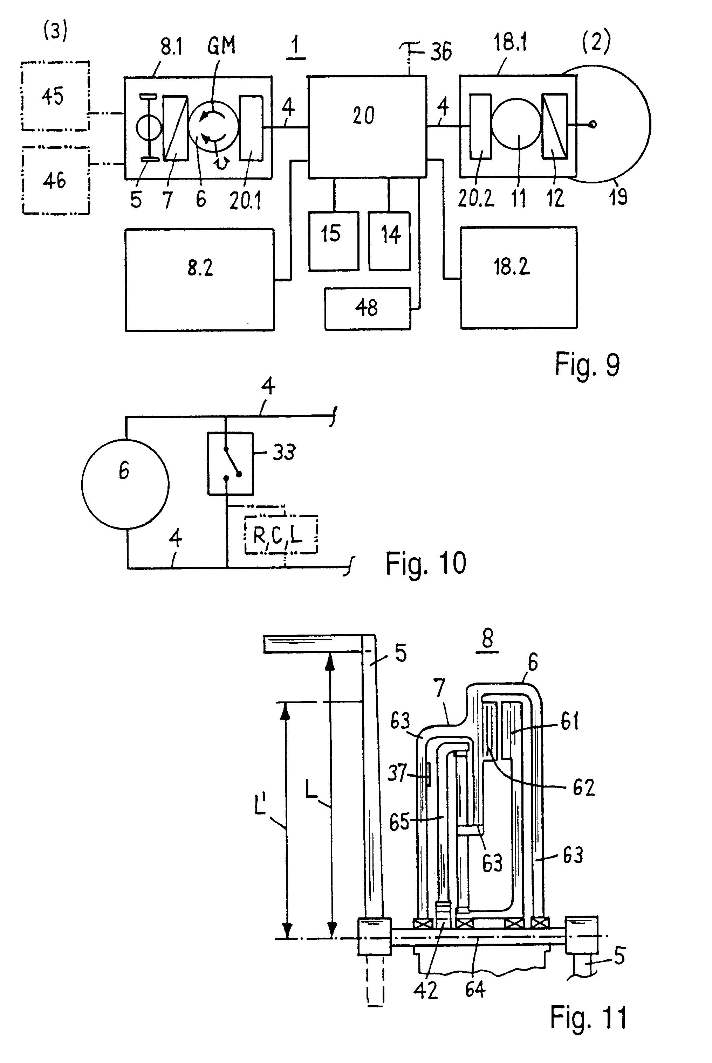

Anstelle eines Pedal-Kubelantriebs können natürlich auch andere Arten von Muskelkraftantrieben in analoger Weise eingesetzt werden, z.B. Linearantriebe, Ruderantriebe usw., welche mittels Bein-, Arm- oder Rumpfbewegungen angetrieben werden. Vor allem für Therapieanwendungen kann dabei die Geometrie des Muskelkraftantriebs auch einstellbar ausgebildet sein. Dabei kann sowohl die Auslenkung L der Antriebsbewegung (L entspricht z.B. dem Radius einer Pedalkurbel, Fig. 1, 11) als auch die Position des Benutzers relativ zum Antrieb einstellbar sein. So können die Bewegungsamplituden L für Therapie und Training variierbar sein (Fig. 11). Als ein weiteres Sicherheitselement, z.B. für exzentrisches Training, kann eine Charakteristik Er, Ev so gesteuert sein, dass die motorische Bewegung des Pedalgenerators sofort gestoppt wird, um Verletzungen zu vermeiden, wenn der Benutzer vom Pedal abrutscht bzw. seine Muskelkraftbremsung plötzlich aussetzt. Dazu wird ein passender Sensor 37 eingesetzt, welcher die Kraftänderung detektiert.

Beim exzentrischen Training Er, Ev können relativ hohe Muskelkräfte und Leistungen eingesetzt werden mit wesentlich geringerer Kreislaufbelastung im Vergleich zu konzentrischem Training. D.h. die gleiche Motorleistung des Generators zu bremsen ist viel weniger anstrengend als diese zu leisten (im Prinzip entspricht dies der Erfahrung, dass eine Treppe hochzusteigen viel anstrengender ist als mit gleicher Geschwindigkeit hinunter zu laufen). Deshalb bildet das exzentrische Training (neben dem athletischen Training) vor allem in der kardiovaskulären Therapie einen ganz grossen Vorteil bzw. eröffnet neue und wesentlich bessere Therapiemöglichkeiten.

Fig. 7 zeigt ein Normalfahrrad mit einem aus Modulen bestehenden erfindungsgemässen Antriebssystem 1. An einem Chassis 53 mit einem Sitz 52 ist ein Pedal-Generator-Modul 8 als Baueinheit befestigt, welches hier aus einem Tretpedal 5, einem Zahnriemengetriebe 7.1, allfällig einem sperrbaren Freilauf 42 und einem Generator 6 besteht. Die elektrische Steuerung 20 wie auch die elektrischen Speicher 14 bzw. mit Vorteil auch ein Super cap 15 und ein Eingabe- und Anzeigeelement 30 können ebenfalls als separierbare Module oder Baueinheiten am Chassis befestigt sein. Die elektrische Transmission 4 liefert die benötigte Energie an einen Antriebsmotor 11a, welche hier im Hinterrad 19 z.B. als Radnabenmotor ausgebildet ist. Um optimale Wirkungsgrade der Antriebsmotoren zu erreichen, können z.B. auch zwei unterschiedlich ausgelegte Motoren 11a und 11b je für einen höheren und einen tieferen Geschwindigkeitsbereich vorgesehen sein, was hier mit einem möglichen zusätzlichen Motor 11b im Vorderrad angedeutet ist, oder es kann auch ein Motor mit umschaltbaren Wicklungen eingesetzt werden, welche für unterschiedliche Geschwindigkeitsbereiche optimiert sind.

Ein solches Fahrrad kann zusätzlich auch als stationäres Trainingsgerät im Hause eingesetzt werden, z.B. fixiert auf einer Trainingsstütze 56. Falls diese eine Bremsrolle 57 aufweist, so können auch Fahrprogramme mit Motor 11a absolviert werden oder es kann auch direkt ein elektrischer Verbraucher 10 zugeschaltet werden.

Fig. 7 zeigt auch eine zusätzliche mögliche Variante, um einen Stillstands-Tretwiderstand TW und für ganz wenige Umdrehungen ein hohes Anfahrmoment MA zu erzeugen. Dies in Form eines rückspulbaren Seilzugs 41 zwischen dem Tretpedal 5 und dem Antriebsrad 19. Der Seilzug kann z.B. 3 bis 5 Windungen am Tretpedal bzw. 2 - 3 Windungen am Rad 19 aufweisen. Im Gegensatz zu einem herkömmlichen Kettenantrieb kann ein solcher Hilfsseilzug 41 mit nur einem Strang, welcher umlenkbar ist und keine Schmierung erfordert, auch sehr einfach ausgebildet sein. Beim Anfahren ist der Seilzug auf das Rad 19 rückgespult, wird anschliessend für maximal 3 Umdrehungen auf das Tretpedal aufgewickelt, dann entkoppelt und wieder zurückgespult. Beim nächsten Anfahren kann der Seilzug 41 dann wieder eingekoppelt werden.

Fig. 8 zeigt ein Beispiel eines zweiplätzigen Mehrspurfahrzeugs mit zwei Vorderrädern und einem oder zwei Hinterrädern 19. Das Antriebsmotor-Modul 18 ist als Antriebsschwinge 54 ausgebildet mit einem Motor 11, z.B. einem Zahnriemen oder einer Kette als Untersetzungsgetriebe 12 und allfällig einem schaltbaren Freilauf oder einer Kupplung (43). Für einen Fahrer 60 und einen Beifahrer ist je ein Liegesitz 52 vorgesehen, womit die weit vorn angeordneten Pedal-Generator-Module 8.1, 8.2 je für Fahrer und Beifahrer mit flacher Beinstellung angetrieben werden. Der Nullpunkt des Pedalwinkels W1 = 0 (d.h. der obere Totpunkt) liegt hier entsprechend flach, während er beim Normalfahrrad von Fig. 7 im wesentlichen nach oben gerichtet ist. Die Modulbauweise ermöglicht es, jedem Fahrzeuginsassen eines mehrplätzigen Fahrzeugs einen eigenen Pedalgenerator 8.1, 8.2 zuzuordnen und diese je nach Bedarf auch wieder auszubauen. In einer Ausführung als Vierradfahrzeug können auch zwei separate Motor-Module 18.1, 18.2 zum Antrieb der Hinterräder 19 vorgesehen sein.

Dies wird in der schematischen Darstellung der Modulbauweise nach Fig. 9 gezeigt. Es können ein, zwei oder auch mehrere Pedal-Generator-Module 8.1, 8.2 und ebenso ein oder mehrere Motor-Module 18.1, 18.2 je nach Art und Einsatz des Fahrzeugs bzw. nach Benutzerwünschen eingesetzt werden. Dieses Modulkonzept ermöglicht eine rationelle und kostengünstige Fertigung für eine Vielzahl von Anwendungen. Die Pedal-Generator-Module 8 und die Motor-Module 18 können dabei wahlweise auch je die direkte Generatorsteuerung 20.1 bzw. Motorsteuerung 20.2 enthalten (sie sind jedoch Bestandteile der Gesamtsteuerung 20).

Vor allem in Fahrzeugen werden besonders leichte und effiziente Generatoren 6 und Motoren 11 eingesetzt, neben leichten Bürstenmotoren z.B. auch elektronisch kommutierte ("brushless") DC-Motoren und Generatoren. In einem Leichtmobil, welches keinen Exzentrikbetrieb benötigt, kann als besonders einfache und effiziente Ausführung ein einphasiger bürstenloser ("brushless") DC-Generator eingesetzt werden, welcher eine entsprechend einfachere Einphasen-Steuerung mit höherem Wirkungsgrad aufweist.

Bei der Anwendung des Antriebssystems 1 in einem stationären Trainingsgerät 3 können dem Tretpedal 5 und dem Generator 6 zur Abführung der erzeugten Pedalenergie im konzentrischen Training auch elektrische, mechanisch oder fluide Bremsen 45 wie Bremswiderstände, Wirbelstrombremsen, Reibungsbremsbeläge, Gas- und Flüssigkeitsdämpfungselemente oder mechanische Speicher 46 wie Federkraftspeicher oder Gas- und Flüssigdruckspeicher zugeordnet sein. Die benötigte Antriebsleistung des Generators im Motorbetrieb (nach Charakteristiken Er, Ev in Fig. 6) bei exzentrischem Training kann auch über einen Netzanschluss 36 bezogen werden. Natürlich kann auch abwechselnd mit konzentrischem Training Gv ein elektrischer Speicher 14 geladen und mit exzentrischem Training Er wieder entladen werden.

Fig. 10 zeigt eine besonders einfache Ausführungsvariante zur Erzeugung eines Stillstands-Tretwiderstands TW und eines genügend hohen Anfahrwiderstandsmoments MA am Tretpedal. Dazu wird der Generator 6 mittels eines elektrischen Schalters 33 direkt oder über Widerstände R, Kondensatoren C und Spulen L kurzgeschlossen. Der elektrische Schalter ist bei ausgeschalteter elektrischer Steuerung 20 geschlossen, so dass auch dann ein genügender Tretwiderstand TW auftritt. Durch kurzzeitiges Ein- und Ausschalten (Choppern) des elektrischen Schalters 33 während des Anfahrens aus dem Stillstand bis zu einer Betriebs-Tretfrequenz von z.B. 50 rpm kann das hohe Anfahrmoment MA erzeugt werden.

Zur Erzeugung eines Stillstands-Tretwiderstands schon bei einer Tretfrequenz f = 0 kann auch eine zusätzliche Stillstandsbremsung 71 (siehe Fig. 3), z.B. in Form einer mechanischen Bremse, eingesetzt werden, welche auch bei ausgeschalteter elektrischer Steuerung 20 wirksam ist und welche sofort nach Anfahren z.B. schon bei einer Tret-Frequenz f von wenigen rpm wieder gelöst wird.

Eine Stillstandsbremsung kann im Prinzip auch durch entsprechende Steuerung des Generators als Motor erzeugt werden, welche jedoch nur sehr kurz, z.B. von W = 0 bis 5° (Fig. 2) bzw. f = 0 bis 3 rpm (Fig. 3) wirksam ist.

Eine bevorzugte optimale Winkelstellung des Pedals zum Anfahren kann (wie bisher) durch Rückwärtstreten erreicht werden, z.B. mittels eines sperrbaren Freilaufs am Generator oder indem die Generatorsteuerung in Rückwärts-Tretrichtung r nur ein geringes Widerstandsmoment erzeugt. Als weitere Variante kann das Pedal auch langsam in eine bevorzugte, vom Benutzer programmierbare Anfahrstellung gebracht werden, wenn das System einige Zeit nicht benutzt wurde, und/oder die Steuerung kann nach einiger Zeit in einen Ruhezustand übergehen.
In einem stromsparenden Ruhezustand kann die Elektronik auch die Pedalstellung überwachen.

Normalerweise wird das System mit einem Hauptschalter eingeschaltet, es kann aber auch ein selbsttätiges Hochfahren vorgesehen werden (autoboot), z.B. durch bewusstes Bewegen des Tretpedals als Information zum Aufstarten des Systems, wobei die Bewegung generatorisch Strom erzeugen und damit die Elektronik einschalten kann.

Fig. 11 zeigt ein Beispiel eines leichten, kompakten, flachen Pedal-Generator-Moduls 8 mit einem bürstenlosen Synchron-Motor mit Permanentmagneten auf einem Rotor 61 mit relativ grossem Durchmesser und einem Stator 62 an einem festen Modulgehäuse 63, welches auch die Planetenräder eines Planetengetriebes 7.2 trägt. Ein Aussenzahnrad 65 ist mit der Pedalkurbelachse 64 verbunden. Mit diesem einstufigen kompakten Getriebe können z.B. Übersetzungen von 7 - 10 von Pedal 5 auf den Generator 6 erreicht werden mit entsprechend hoher Momentenübersetzung. D.h. ein erforderliches Anfahrwiderstandsmoment MA von 50 Nm am Pedal erfordert bei 10:1 Übersetzung am Generator nur 5 Nm. Falls für eine besonders einfache Ausführung des Moduls 8 kein Übersetzungsgetriebe vorgesehen ist, so sollte der Motor sehr flach und mit grossem Durchmesser ausgebildet sein, um grössere Widerstandsmomente MA erreichen zu können. Ein (schaltbarer oder sperrbarer) Freilauf 42 kann zwischen Tretpedal 5 und Generator 6 ebenfalls integriert sein, z.B. am Aussenzahnrad 65 oder am Rotor 61. Als Beispiel einer einstellbaren Geometrie ist hier eine mögliche veränderbare Kurbellänge L, L' gezeigt.

Mit dem erfindungsgemässen Antriebssystem 1 können beim Einsatz in Fahrzeugen Fahrprogramme 25 verschiedenster Art integriert sein, beispielsweise mit Charakteristiken-Schaltung nach Fig. 3 oder ein Parkprogramm zum Manövrieren bei niedrigen Geschwindigkeiten bis beispielsweise 5 km/h (auch wählbar), wo die Fahrgeschwindigkeit des Fahrzeugs direkt mit der Pedalgeschwindigkeit elektrisch proportional gekoppelt ist, so dass man also mit der Pedalbewegung vorwärts und rückwärts genau so manövrieren kann wie mit einer festen mechanischen Transmission. Als weiteres wichtiges Beispiel kann z.B. auch ein Kraftverstärkungs-Fahrprogramm gewählt werden, bei welchem proportional zur am Tretpedal abgegebenen Muskelleistung eine zusätzliche elektrische Leistung aus dem elektrischen Speicher 14 in den Motor geleitet wird. Dieser Kraftverstärkungsfaktor kann auch wählbar ausgebildet sein, so dass z.B. für Überholvorgänge oder an Steigungen ein höherer Verstärkungsfaktor einstellbar ist. Der Faktor kann auch negativ sein, so dass z.B. nur 80% der Pedalleistung zum Fahren und 20% zum Laden der Batterien eingesetzt werden. Mittels verschiedener Sensoren 37 an Tretpedal, Generator, Motor und Antriebsrad können eine Vielzahl von Daten erfasst bzw. auch Parameter für die Fahrprogramme eingegeben werden. Solche Sensoren und Messwertgebern (Fig. 1) können z.B. Richtungssensoren, Positions- und Drehwinkelgeber, Frequenz-, Leistungs- und Momentsensoren usw. sein. Damit können eine Vielzahl von Betriebsdaten wie Muskelkraft und Motorleistung, Geschwindigkeiten, Wirkungsgrade, Fahrwiderstand, Energiebilanz usw. laufend erfasst und z.B. in einem internen Speicher 29 gespeichert werden. Der Datenspeicher 29 kann auch abnehmbar ausgeführt sei. Dazu kann z.B. eine handelsübliche elektronische Taschenagenda eingesetzt werden, welche nicht nur herkömmliche Tachodaten wie Geschwindigkeit, Strecke etc. in Funktion der Fahrzeit aufzeichnet, sondern auch Tretleistung, Tretfrequenz und allfällig Herzfrequenz. Angekoppelt an einen Computer kann die Taschenagenda diese Daten abgleichen, z.B. als Trainingstagebuch. Mit einem abnehmbaren Datenspeicher kann überdies eine Schliessfunktion durch Wegnahme bewirkt werden, wie auch eine Einschaltfunktion durch Aufstecken eines externen Datenspeichers 29. Im stationären Training können analog verschiedene Betriebsprogramme 24 oder stationäre Fahrprogramme einstellbar und wählbar sein. Eine externe Schnittstelle 35 dient zur Ausgabe von Fahrund Betriebsdaten an ein externes Gerät 38, die anschliessend z.B. an einem PC ausgewertet und dargestellt werden können. Oder es kann auch ein Betriebsprogramm kombiniert mit einem Videospiel oder einer Videodarstellung einer Fahrstrecke abgespielt und gefahren werden.

Es ist auch möglich, selber Fahrstrecken zu programmieren und z.B. eine definierte Teststrecke in der Anwendung als Trainingsgerät nach verschiedenen Kriterien optimal zu fahren, z.B. möglichst rasch, mit optimalem Wirkungsgrad oder optimaler Energiebilanz (Muskelenergie, Motorenergie, Speicherkapazität und Fahrleistung).

Im Rahmen dieser Beschreibung werden die folgenden Bezeichnungen verwendet:
- 1: elektrisches Antriebssystem
- 2: Fahrzeug
- 3: stationäres Trainingsgerät
- 4: elektrische Transmission
- 5: Tretpedal (muskelkraftbetriebene Antriebsvorrichtung)
- 6: Generator
- 7: Generatorgetriebe
- 7.1: Zahnriemengetriebe
- 7.2: Planetengetriebe
- 8: Pedal-Generator-Modul
- 10: elektrischer Verbraucher
- 11: Antriebsmotor
- 11a, 11b: unterschiedliche Antriebsmotoren
- 12: Motorgetriebe
- 14: elektrischer Speicher
- 15: Super cap
- 18: Motor-Modul
- 19: Rad, Antriebsrad
- 20: elektrische Steuerung
- 20.1: Generatorsteuerung
- 20.2: Motorsteuerung
- 21: Steuerprogramm des Generators
- 22: Anfahrsteuerung
- 23: Motorbetriebssteuerung von 6
- 24: Betriebsprogramme
- 25: Fahrprogramme
- 29: Datenspeicher
- 30: Eingabe- und Anzeigegerät
- 31: bidirektionaler Wandler
- 33: elektrischer Schalter an 6
- 35: Interface für externe Anschlüsse
- 36: Netzanschluss
- 37: Sensoren, Messwertgeber
- 38: externes Gerät
- 41: rückspulbarer Seilzug
- 42: sperrbarer Freilauf
- 43: schaltbare Kupplung
- 45: Bremsen
- 46: mechanische Speicher
- 48: zusätzliche Energiequellen
- 52: Sitz
- 53: Chassis
- 54: Antriebsschwinge
- 56: Trainingsstütze
- 57: Bremsrolle
- 60: Fahrer
- 61: Rotor
- 62: Stator
- 63: Gehäuse
- 64: Achse
- 65: Aussenzahnrad
- 70: bisheriger Momentenverlauf
- 71: Stillstandsbremsung
- V, Vmin: Geschwindigkeit
- f: Tretfrequenz von 5
- b, bmax: Beschleunigung von f
- GM: Gegenmoment
- TW: Stillstands-Tretwiderstand
- M,M1,Gv,Er, Ev,Br,Bv: Momente an 5
- MA: Anfahrwiderstandsmoment an 5
- W: Anfahrwinkel an 5
- W1: Pedalwinkel
- F: tangentiale Pedalkraft
- L: Auslenkung, Pedalradius
- t: Zeit
- v, r: vorwärts, rückwärts (Tretrichtung)

## Patentansprüche

1. Mit Muskelkraft betreibbares elektrisches Antriebssystem (1) für ein Fahrzeug (2) mit einem Tretpedal (5) und einem mechanisch mit dem Tretpedal verbundenen Generator (6), mit einer elektrischen Transmission (4) vom Generator (6) zu einem Antriebsmotor (11) sowie mit einer elektrischen Steuerung (20), **dadurch gekennzeichnet, dass**
die elektrische Steuerung ein Steuerprogramm (21) des Generators (6) aufweist, womit ein Gegenmoment GM am Generator, bezogen auf die Vorwärts-Tretrichtung v erzeugbar ist,
dass eine Anfahrsteuerung (22) des Generators vorgesehen ist, mit welcher ein bei Betätigung des Tretpedals aus dem Stillstand heraus unmittelbar auftretender Tretwiderstand TW erzeugt wird
und womit ein hohes Anfahrwiderstandsmoment MA am Tretpedal erzeugt wird beim Anfahren aus dem Stillstand bis zu einer minimalen Fahrgeschwindigkeit.

2. Antriebssystem nach Anspruch 1, **dadurch gekennzeichnet, dass** das Antriebssystem als Antrieb mit Gegenmoment für ein stationäres Trainingsgerät (3) einen elektrischen Verbraucher (10) und eine Motorbetriebs-Steuerung (23) mit einem bidirektionalen Wandler (31) aufweist, mit welchem der Generator (6) auch als Motor betreibbar ist, mit steuerbarer Einund Auskoppelung von elektrischer Leistung.

3. Antriebssystem nach Anspruch 1, **dadurch gekennzeichnet, dass** der Stillstands-Tretwiderstand TW einer Betätigungskraft F am Tretpedal (5) von mindestens 200 N entspricht.

4. Antriebssystem nach einem der vorangehenden Ansprüche, **dadurch gekennzeichnet, dass** das Anfahrwiderstandsmoment MA am Tretpedal mindestens 40 Nm beträgt.

5. Antriebssystem nach einem der vorangehenden Ansprüche, **dadurch gekennzeichnet, dass** mit der Anfahrsteuerung (22) des Generators das Anfahren des Generators so gesteuert ist, dass die Anfahrbeschleunigung des Tretpedals (bmax) im Mittel höchstens 4 rad/sec² beträgt.

6. Antriebssystem nach einem der vorangehenden Ansprüche, **dadurch gekennzeichnet, dass** das Widerstandsmoment (M1) des Generators in Phase mit dem Pedalwinkel (W1) moduliert ist.

7. Antriebssystem nach einem der vorangehenden Ansprüche, **dadurch gekennzeichnet, dass** eine Stillstandsbremsung (71) des Tretpedals wirksam ist, die einen Stillstands-Tretwiderstand TW erzeugt und welche auch bei ausgeschalteter elektrischer Steuerung (20) wirksam ist.

8. Antriebssystem nach einem der vorangehenden Ansprüche, **dadurch gekennzeichnet, dass** der Generator mittels eines elektrischen Schalters (33) direkt oder über Widerstände, Kondensatoren und Spulen kurzschliessbar ist und wobei der elektrische Schalter bei ausgeschalteter elektrischer Steuerung (20) geschlossen ist zur Erzeugung des Tretwiderstands TW.

9. Antriebssystem nach Anspruch 8, **dadurch gekennzeichnet, dass** durch kurzzeitiges Ein- und Ausschalten (Choppern) des elektrischen Schalters (33) während des Anfahrens das hohe Anfahrmoment MA erzeugt wird.

10. Antriebssystem nach einem der vorangehenden Ansprüche, **dadurch gekennzeichnet, dass** das Generatorsteuerprogramm (21) mehrere umschaltbare Momentencharakteristiken (M60, M120) aufweist, welche in einem Normalbereich der Tretfrequenz ansteigen.

11. Antriebssystem nach einem der vorangehenden Ansprüche, **dadurch gekennzeichnet, dass** dem Tretpedal (5) und dem Generator elektrische, mechanische oder fluide Bremsen (45) wie Bremswiderstände, Wirbelstrombremsen, Reibungsbremsbeläge, Gas- und Flüssigkeitsdämpfungselemente oder mechanische Speicher (46) wie Federkraftspeicher oder Gas- und Flüssigdruckspeicher zugeordnet sind.

12. Antriebssystem nach einem der vorangehenden Ansprüche, **dadurch gekennzeichnet, dass** ein sperrbarer Freilauf (42) oder eine schaltbare (43) Kupplung zwischen Tretpedal und Generator vorgesehen ist.

13. Antriebssystem nach einem der vorangehenden Ansprüche, **dadurch gekennzeichnet, dass** das Antriebssystem modulare Einheiten aufweist wie ein Modul Pedalgenerator (8) mit Tretpedal (5), Generator (6), allfälligem Übersetzungsgetriebe (7) und Generatorsteuerung (20.1), ein Steuerungsmodul (20) und ein Antriebsmotor-Modul (18) mit Motor (11), allfälligem Untersetzungsgetriebe (12) und Motorsteuerung (20.2).

14. Antriebssystem nach einem der vorangehenden Ansprüche, **dadurch gekennzeichnet, dass** elektrische Speicher (14), und insbesondere ein Super-Capacitor (15) (super cap) als Kurzzeitspeicher, vorgesehen sind.

15. Antriebssystem nach einem der vorangehenden Ansprüche, **dadurch gekennzeichnet, dass** zwei unterschiedlich ausgelegte Motoren, (11a, 11b) je für einen höheren und einen tieferen Geschwindigkeitsbereich, oder ein Motor mit umschaltbaren Wicklungen vorgesehen ist.

16. Antriebssystem nach einem der vorangehenden Ansprüche, **dadurch gekennzeichnet, dass** Betriebsdaten wie Drehmomente, Leistungen und Tourenzahl am Tretpedal erfasst und angezeigt werden.

17. Antriebssystem nach einem der vorangehenden Ansprüche, **dadurch gekennzeichnet, dass** ein Interface (35) zum Anschluss von externen Geräten vorgesehen ist.

18. Antriebssystem nach einem der vorangehenden Ansprüche, **dadurch gekennzeichnet, dass** ein abnehmbarer Datenspeicher (29) vorgesehen ist, welcher beim Wegnehmen eine Schliessfunktion des Systems ausübt.

19. Antriebssystem nach einem der vorangehenden Ansprüche, **dadurch gekennzeichnet, dass** die elektrische Schaltung Betriebsprogramme (24) bzw. Fahrprogramme (25) zum Einsatz in Trainingsgeräten bzw. Fahrzeugen enthält.

20. Antriebssystem nach einem der vorangehenden Ansprüche, **dadurch gekennzeichnet, dass** die elektrische Steuerung (20) nach einem wählbaren Zeitinterval, in dem keine Fahrbewegung erfolgt, in einen Ruhzustand übergeht und/oder das Pedal in eine gewünscht Anfahrstellung bewegt wird.

21. Antriebssystem nach einem der vorangehenden Ansprüche, **dadurch gekennzeichnet, dass** das Tretpedal (5) bzw. der Muskelkraftantrieb eine veränderbare Geometrie aufweist.

22. Fahrzeug mit einem Antriebssystem nach einem der Ansprüche 1 - 21.

23. Trainingsgerät mit einem Antriebssystem nach einem der Ansprüche 2 - 21.

## Claims

1. Electric drive system operated with muscle-power (1) for a vehicle (2) with a foot pedal (5) and a generator (6) mechanically connected with the foot pedal, with an electric transmission (4) from the generator (6) to a drive motor (11) as well as with an electric control system (20), **characterised in that** the electric control system comprises a control program (21) of the generator (6), with which a counter moment GM on the generator, related to the forwards pedalling direction v is generatable, that a starting control (22) of the generator is provided, with which when the foot pedal is actuated from standstill an immediately occurring pedal resistance TW is generated
and with which a high starting moment MA is generated at the foot pedal when starting from standstill up to a minimum riding speed.

2. Drive system according to claim 1, **characterised in that** the drive system as a drive with counter moment for a stationary training apparatus (3) comprises an electric consumer (10) and a motor operation control (23) with a bi-directional converter (31), with which the generator (6) is also operatable as a motor, with controllable coupling and uncoupling of electric power.

3. Drive system in accordance with claim 1, **characterised in that** the standstill pedal resistance TW corresponds to an actuation force F on the foot pedal (5) of at least 200 N.

4. Drive system according to one of the preceding claims, **characterised in that** the starting moment MA at the foot pedal amounts to at least 40 Nm.

5. Drive system in accordance with one of the preceding claims, **characterised in that** with the starting control (22) of the generator the starting of the generator is controlled in such a manner, that the starting acceleration of the foot pedal (bmax) on average amounts to a maximum of 4 rad/sec².

6. Drive system according to one of the preceding claims, **characterised in that** the resistance or load moment (M1) of the generator is modulated in phase with the pedal angle (W1).

7. Drive system in accordance with one of the preceding claims, **characterised in that** a standstill braking (71) of the foot pedal is active, which produces a standstill pedal resistance TW and which is also effective in case the electric control system (20) is switched off.

8. Drive system according to one of the preceding claims, **characterised in that** the generator is short-circuitable by means of an electric switch (33) directly or through resistors, capacitors and coils and wherein the electric switch in case the electric control system (20) is switched off is closed for the generation of the pedal resistance TW.

9. Drive system in accordance with claim 8, **characterised in that** by means of brief switching on and switching off (choppering) of the electric switch (33) during the starting the high starting moment MA is generated.

10. Drive system in accordance with one of the preceding claims, **characterised in that** the generator control program (21) comprises several moment characteristics (M60, M120), which are able to be changed over between and which increase within a normal range of the pedalling frequency.

11. Drive system according to one of the preceding claims, **characterised in that** to the foot pedal (5) and to the generator electrical, mechanical or fluid brakes (45), such as braking resistors, eddy current brakes, friction brake pads, gas - and fluid damping elements or mechanical storage devices (46), such as spring-power storage devices or gas - and liquid storage devices are assigned.

12. Drive system in accordance with one of the preceding claims, **characterised in that** a blockable free-wheel system (42) or a switchable clutch (43) is provided between the foot pedal and the generator.

13. Drive system according to one of the preceding claims, **characterised in that** the drive system comprises modular units such as a pedal generator module (8) with foot pedal (5), generator (6), a possible speed transmission (7) and generator control system (20.1), a control module (20) and a drive motor module (18) with motor (11), a possible speed reduction transmission (12) and a motor control system (20.2).

14. Drive system in accordance with one of the preceding claims, **characterised in that** electric storage devices (14), and in particular a super capacitor (15) (super cap), are provided as short-term storage devices.

15. Drive system according to one of the preceding claims, **characterised in that** two differently designed motors, (11a, 11b) each respectively for a higher and a lower speed range, or a motor with switched windings is provided.

16. Drive system in accordance with one of the preceding claims, **characterised in that** operating data, such as moments or torques, powers and revolutions per minute on the foot pedal are recorded and indicated.

17. Drive system according to one of the preceding claims, **characterised in that** an interface (35) is provided for the connection of external devices.

18. Drive system in accordance with one of the preceding claims, **characterised in that** a removable data storage device (29) is provided, which when it is removed carries out a closing function of the system.

19. Drive system according to one of the preceding claims, **characterised in that** the electric circuit comprises operating programs (24), resp., driving or riding programs (25) for the utilisation in training apparatuses, resp., vehicles.

20. Drive system in accordance with one of the preceding claims, **characterised in that** the electric control system (20) after a selectable time interval, during which no travelling motion takes place, goes over into an inoperative or idle condition and/or the pedal is moved to a desired starting position.

21. Drive system according to one of the preceding claims, **characterised in that** the foot pedal (5), resp., the muscle-powered drive comprises a changeable geometry.

22. Vehicle with a drive system in accordance with one of the claims 1 - 21.

23. Training apparatus with a drive system according to one of the claims 2 - 21.

## Revendications

1. Système d'entraînement (1) actionnable avec une force musculaire pour un véhicule (2), avec une pédale (5) et un générateur (6) relié mécaniquement avec la pédale, avec une transmission électrique (4) du générateur (6) vers un moteur d'entraînement (11) ainsi qu'avec une commande électrique (20), **caractérisé en ce que** la commande électrique comporte un programme de commande (21) du générateur (6), avec lequel un couple antagoniste GM peut être produit au niveau du générateur, par rapport à la direction d'actionnement vers l'avant v, **en ce qu'**une commande de démarrage (22) du générateur est prévue, avec laquelle une résistance directe à l'actionnement TW est produite lors de l'actionnement de la pédale à partir de l'arrêt et avec laquelle un couple élevé de résistance au démarrage MA est produit au niveau de la pédale lors du démarrage à partir de l'arrêt jusqu'à une vitesse minimale.

2. Système d'entraînement selon la revendication 1, **caractérisé en ce que** le système d'entraînement comporte, comme entraînement avec couple antagoniste pour un appareil d'entraînement (3), un consommateur électrique (10) et une commande de fonctionnement du moteur (23) avec un convertisseur bidirectionnel (31), avec lequel le générateur (6) peut également être utilisé comme un moteur, avec couplage et découplage de la puissance électrique.

3. Système d'entraînement selon la revendication 1, **caractérisé en ce que** la résistance à l'actionnement à l'arrêt TW correspond à une force d'actionnement F au niveau de la pédale (5) d'au moins 200 N.

4. Système d'entraînement selon l'une des revendications précédentes, **caractérisé en ce que** le couple de résistance au démarrage MA au niveau de la pédale est d'au moins 40 Nm.

5. Système d'entraînement selon l'une des revendications précédentes, **caractérisé en ce qu'**avec la commande de démarrage (22) du générateur, le démarrage du générateur est commandé de telle sorte que l'accélération de démarrage de la pédale (bmax) est en moyenne 4 rad/sec² tout au plus.

6. Système d'entraînement selon l'une des revendications précédentes, **caractérisé en ce que** le couple de résistance (M1) du générateur est modulé en phase avec l'angle de la pédale (W1).

7. Système d'entraînement selon l'une des revendications précédentes, **caractérisé en ce qu'**un freinage d'arrêt (71) de la pédale est actif, qui produit une résistance d'actionnement à l'arrêt TW et qui est actif également lorsque la commande électrique (20) est mise hors service.

8. Système d'entraînement selon l'une des revendications précédentes, **caractérisé en ce que** le générateur peut être court-circuité à l'aide d'un interrupteur électrique (33) directement ou par l'intermédiaire de résistances, de condensateurs et de bobines et moyennant quoi l'interrupteur électrique est fermé lorsque la commande électrique (20) est mise hors service pour produire la résistance à l'actionnement TW.

9. Système d'entraînement selon la revendication 8 , **caractérisé en ce que** le couple de démarrage élevé MA est produit par de courtes fermetures et ouvertures (hachage) de l'interrupteur électrique (33) pendant le démarrage.

10. Système d'entraînement selon l'une des revendications précédentes, **caractérisé en ce que** le programme de commande du générateur (21) comporte plusieurs caractéristiques de couples (M60, M120) commutables, qui sont croissantes dans un domaine normal de la fréquence d'actionnement.

11. Système d'entraînement selon l'une des revendications précédentes, **caractérisé en ce que** la pédale (5) et le générateur sont munis de freins (45) électriques, mécaniques ou à fluides, comme des résistances de freinage, de freins à courants de Foucault, des garnitures de freins à frottement, des éléments d'amortissement à liquide ou à gaz ou des accumulateurs mécaniques (46) comme des accumulateurs de force élastique ou des accumulateurs de pression de liquide ou de gaz.

12. Système d'entraînement selon l'une des revendications précédentes, **caractérisé en ce qu'**une roue libre (42) pouvant être bloquée ou un embrayage (43) est prévu entre la pédale et le générateur.

13. Système d'entraînement selon l'une des revendications précédentes, **caractérisé en ce que** le système d'entraînement comporte des unités modulaires comme un module de générateur à pédale (8) avec une pédale (5), un générateur (6), un engrenage de démultiplication (7) et une commande de générateur (20.1), un module de commande (20) et un module de moteur d'entraînement (18) avec un moteur (11), un engrenage de démultiplication (12) et une commande de moteur (20.2).

14. Système d'entraînement selon l'une des revendications précédentes, **caractérisé en ce que** des accumulateurs électriques (14) et plus particulièrement un super-condensateur (15) (super cap) sont conçus comme des accumulateurs à court terme.

15. Système d'entraînement selon l'une des revendications précédentes, **caractérisé en ce que** deux moteurs de conceptions différentes (11a, 11b), l'un étant pour un domaine de vitesse plus important et l'autre pour un domaine de vitesse plus faible, ou un moteur avec des enroulements commutables est prévu.

16. Système d'entraînement selon l'une des revendications précédentes, **caractérisé en ce que** les données de fonctionnement comme les couples de rotation, les puissances et la vitesse de rotation au niveau de la pédale sont déterminées et affichées.

17. Système d'entraînement selon l'une des revendications précédentes, **caractérisé en ce qu'**une interface (35) est prévue pour le raccordement avec des appareils externes.

18. Système d'entraînement selon l'une des revendications précédentes, **caractérisé en ce qu'**une mémoire de données (29) amovible est prévue, qui, lorsqu'elle est retirée, exerce une fonction de fermeture du système.

19. Système d'entraînement selon l'une des revendications précédentes, **caractérisé en ce que** le circuit électrique comprend des programmes de fonctionnement (24) ou des programmes de conduite (25) utilisés dans des appareils d'entraînement ou des véhicules.

20. Système d'entraînement selon l'une des revendications précédentes, **caractérisé en ce que** la commande électrique (20) passe, après un intervalle de temps pouvant être sélectionné, pendant lequel aucun mouvement n'est réalisé, à un état de repos et/ou la pédale est déplacée dans une position de démarrage souhaitée.

21. Système d'entraînement selon l'une des revendications précédentes, **caractérisé en ce que** la pédale (5) ou l'entraînement par la force musculaire comporte une géométrie variable.

22. Véhicule avec un système d'entraînement selon l'une des revendications 1 à 21.

23. Appareil d'entraînement avec un système d'entraînement selon l'une des revendications 2 à 21.
